Europäisches Patentamt

European Patent Office

Office européen des brevets

(11) Publication number: **0 252 195**
**A2**

# EUROPEAN PATENT APPLICATION

(21) Application number: 86830192.0

(51) Int. Cl.4: **H02B 9/00**

(22) Date of filing: 07.07.86

(43) Date of publication of application:
**13.01.88 Bulletin 88/02**

(84) Designated Contracting States:
**AT BE CH DE FR GB IT LI LU NL SE**

(71) Applicant: **Guerra, Gianfranco**
**via Risorgimento 113**
**I-48022 Lugo Ravenna(IT)**

(72) Inventor: **Guerra, Gianfranco**
**via Risorgimento 113**
**I-48022 Lugo Ravenna(IT)**

(74) Representative: **Sassatelli, Franco**
**INIP via Ruggi 5**
**I-40137 Bologna(IT)**

(54) Composable system for column deliverers of electrical energy.

(57) The deliverer consists of a head with two-faces square supported on a column with base obtained by means of flat modules composition. By changing the module composition, the square capacity and the stationing height can be modified.

For mounting, the square section base half-parts (1 and 2) are put into contact with alternated leaning ends to be extended in one sense with pair interposition of linear modules. The side (6) and front parts (7) forming column consist of one or more square base modules put in coplanar assembling superposition and/or by means of incorporated elastic pins (8) as well as with connection plates on the inner side to be fixed by means of bolts. The columns can be mounted first by inserting the side parts into hollows (5) of the base profile parts and by blocking the whole by means of bolts; then by inserting the front sides between counterposed hollows of the said side parts so as they penetrate into an intermediate base groove and by blocking then the part inside with fillet square and bolts. The head can be mounted by assembling pairs of flat parts with square base, acting as side parts and pairs of parts (14) in horizontal position, with incorporated elastic pins (8) and inside disposition bolts. The part (14) can be fixed on the column side ends by means of bolts. On the head another part (14) or a small deck (19) can be fitted with luminous front squares (20).

Access is possible to the delivery by means fitted on panels with inside fitting from the head sides by lifting a transparent screen (24) on a hinge.

## Composable system for column deliverers of electrical energy.

The invention refers to a composable system which, as a principle, permits to reach a closed delivery structure for electrical energy with variable sizes, stationing height and catching capacity, by essentially using flat modules and binding means that can be incorporated and with inside composition. This enables to comply with the different requirements of employ, allows a reduction of stocking, transport and working costs and to carry out a structure solidarily working with an outside quite similar to the single body ones, however to be quickly dismounted and with parts that can be promptly replaced.

The electric energy column deliverers are currenrtly used in touristic bridges, campings, fair places and in any other area, where devices for electrical energy from more points of the main supply network. In the case of bridges, for instance, the device allows to bring electric current by means of cables on each floating unit. The present column energy deliverers consist of only one body with one head on a support to allows its use to the either standing or seated operator, with panels equipped with current take off and safety switches. In relation, if changing the capacity requirements of the head square and of its height, or when particular dimensions of the deliverer are required, for instance for connectiog auxiliary services such as a water supply of other, a different deliverer can be required. Furthermore, these devices are considerably bulky and heavy and, consequently their stockpiling and transport are uneasy. These features scarcely suit means which often are used for a short time only and tendentially change with the time. A deliverer at present used, therefore, represent a considerable stocking problem when it is not employed and limits the operation and use capacities.

The invention device allows to obviato these inconveniences by adopting a modular system operating with employ versatility, with reduced overall dimensions and allows to constantly suit the means and the replacement of the parts thanks to the manual mechanical feasibility.

Substantially, the invention device foresees a closed structure consisting of one or more superposed heads with a two-face square supported on a column with basement obtained by means of essential manual mechanical composition of flat moduluses with incorporable means and inside fixing. By changing the composition and the number when composing, it is possible to change the overall measurements and the shape of the structure according to the capacity and the height of the wished settling. For mounting, basement profiles half-parts, with square base that can be extended in one sense, are put into contact, with interposition of linear module by pairs. The side and front parts forming the column consist of one or more modules with square base put in coplanar assembling in superposition and/or laterally, by means of incorporated elastic pins and with fitting plates on inner side to be fixed by means of bolts. The column is mounted by in serting at first the sides into the hollows of the base profiles and by blocking the whole by means of bolts, then the front sides are inserted between counterposed grooves of the said sides until they penetrate into the basement intermediate hollow, then by blocking the parts inside by means of filling square and bolts. The head is fitted by assembling pair/pairs of flat parts with square base acting as sides and pair body works with horizontal disposition, with incorporated elastic pins and bolts with inside disposition. The body work can be fixed on the side ends of the columns by means of bolts. On the head, either another head or a small roof can be fitted with front luminous squares. The access to the delivery means fitted on superposed panels with inside transversal filling of the head sides is possible by lifting a transparent screen on superposed hinge. The employ of a two-face delivery square, if the structure are equal, redoubles the square capacity and determines two catching stations with opposite orientation which makes the employ easier. The possibility of having two linea available with opposite head orientation in number vertical succession and variable height, enables to perform a deliverer which considerably increases the square capacity, thus assuring the possibility of suiting the increased capacity requirements.

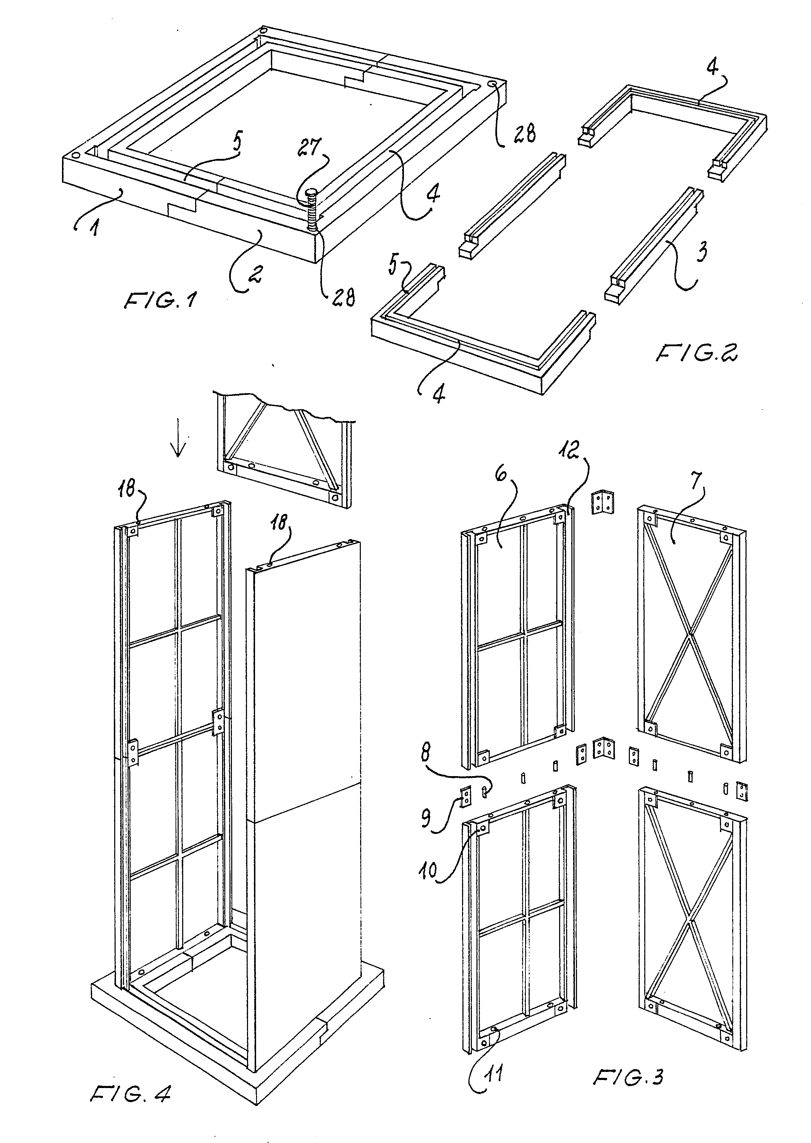

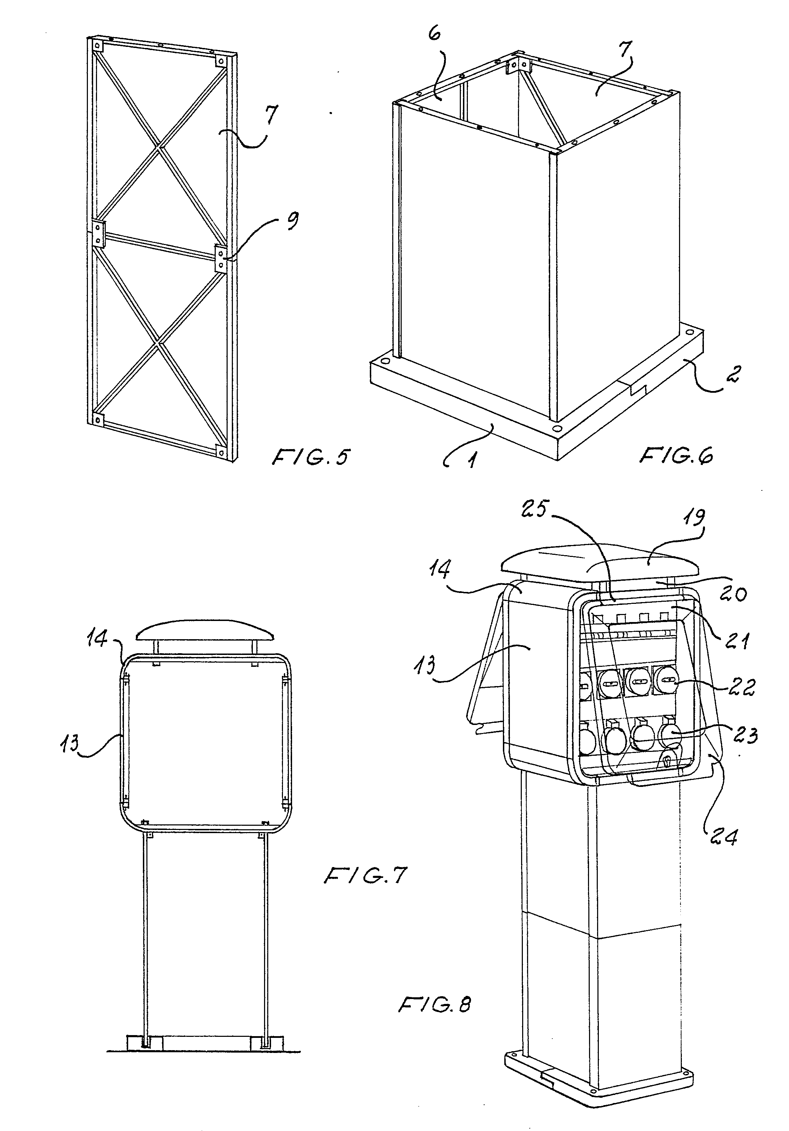

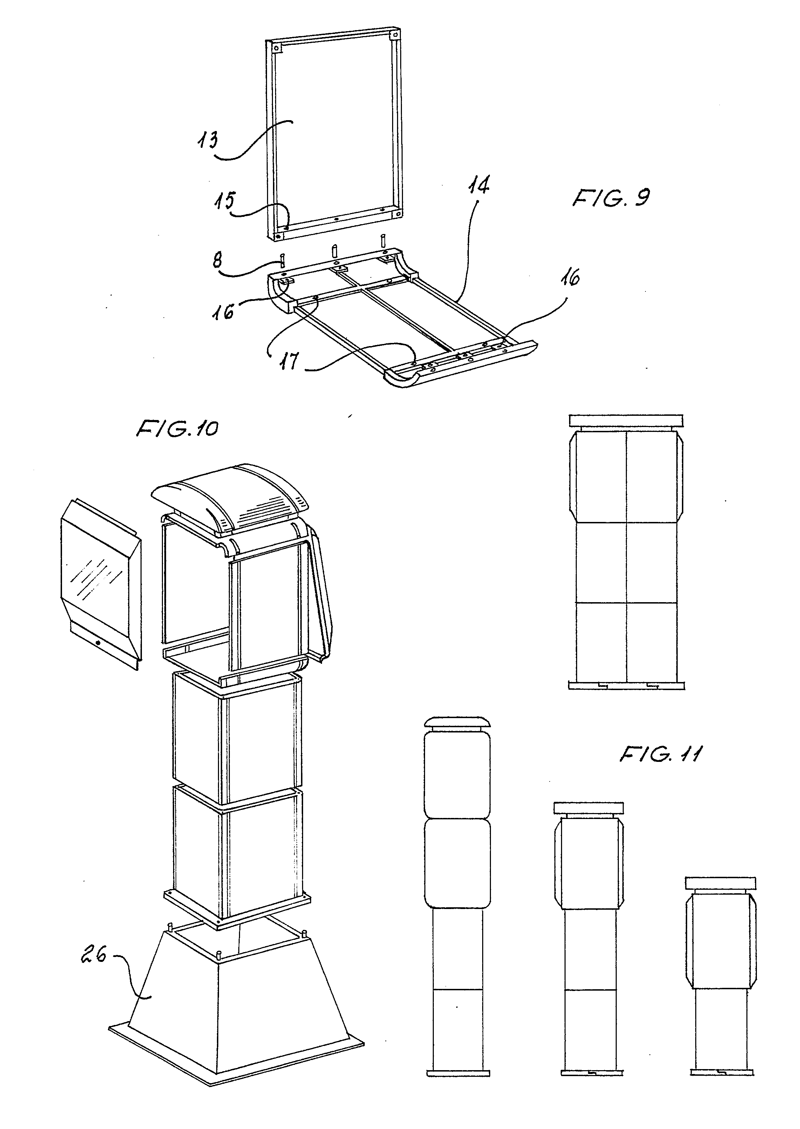

A form of execution for resinglass deliverers is illustrated by means of the drawings of tables 1, 2, 3 and 4. Fig. 1 is the perspective view of a base part with partially inserted one of the four fixing screws in an earthed resinglass plynth. Fig. 2 is the open perspective view of a base which employs the falf-parts of the previous figure with interposed pair of linear elements which allow to widen the base in one sense. Fig. 3 is the perspective open view of two side and front components and of superposed front parts, showing the centering means consist ing of elastic pins binding between the modules of the same type, consisting of a small plates and subsequent binding between the two types of modules formed by squares, these last ones used for blocking by means of bolts. Fig. 4 is a view of the completion of the columns by insertion, in sinking, of the front sides into the side part guides. Fig. 5 is the view of two modules of the side part of the already solidary column. Fig. 6 is the view of a column with only one sector already mounted. Fig. 7 is the section longitudinal view of a deliverer. Fig. 8 is the perspective view of the same deliverer. Fig. 9 is the view of the binding system of a bodywork to the side part for composing the head side. Fig. 10 is the open perspective view of a deliverer with two-sector column imposed on a glassresin foundation plinth. Fig. 11 is respectively the view of a deliverer with only one sector column and one head, another with two sector column and one head, another with two-sector column and two superposed heads, and at least a fourth deliverer with two-sector column, each sector formed by two sidely approched modules for widening in side broadening.

The version employs a base with half-parts 1 and 2 that can be extended with a pair of linear modules 3, the first ones of which characterized by intermediate hollows 4 and lateral ones 5, which are present also on modules 3.Freely laid on a flat surface,is the base, when the column is a more sectors one, the side components 6 and the front ones 7 are assembled and made coplanar by means of elastic pins 8 and blocking with bolts on the plates 9 fitted on the bases 10 of the modules. The side parts 6 are then introduced into the hollows 5 and are blocked by meas of bolts in the bores 11. The front sides 7 are then introduced by sinking into the guides 12 of the side parts 6 letting them into the base hollows 4. The head part can be obtained by composition of side parts 13 with body works 14, similarly acting with elastic pins 8 and blocking with bolts passing through bores 15 into the base ones 16. The head part can be mounted on the column by means of through screws passing into the head bores 17 and the side ones 18. On the head part the small roof 19 can be fitted with luminous squares 20. The panels 21 in parallel support of the picking up devices 22 and 23 are supported on intermediate lifting and side structures. The squares are protected by transparent screens 24 with higher hinge articulations 25. The deliverer can be mounted on resinglass foundation plynth 26 by means of four screws 27 into the basement bores 28.

## Claims

1) Composable system for column deliverers of electrical energy which enables to carry out a closed structure, preferably in resinglass, supported on base column, with one or more superpos ed heads with two-face square by composition of flat planes. For mounting, base profile half-parts (1 and 2) are composed, with alternated leaning terminals, to extend in one sense by interposing linear module pairs (3), the first ones characterized by intermediate (4) and side (5) hollows present on the modules (3) too. Where the columns consist of more sectors, the side (6) and front(7) components are assembled to have them complanar with elastic pins (8) and by blocking with bolts that fix the plates (9)on the base (10) of the modules. The sides (6) are then introduced into the hollows (5) and blocked by means of bolts in the bores (11). The front sides (7) are then sunk into the counterposed guides (12) on the side parts (6) by inserting them into the hollows (4). The head part is formed by composition of the side parts (13) with the body works (14) by acting similarly with elastic pins (8) and blocking with bolts passing through the bores (15) of the same into those of the bases (16). The head part can be mounted on columns by means of through screws into the head bores (17) and side ones (18). A small roof (19) with luminous squares (20) can then be fitted on the head part. The deliverer thus formed can be fitted on resinglass foundation plynth (26) by means of four through screws (27) passing into the bores (28) in the base casting.

2) Composable system for column deliverers of electrical energy, as per claim 1, characterized by the fact that the supporting panels (21) of the captation means (22 and 23) are available on a square horizontally in parallel on lifting intermediate and side structure.

3) Composable system for column deliverers of electrical energy, as per claim 2, characterized by the fact that the squares can be protected by transparent screens (24) fitted on hinges (25).

4) Composable system for column deliverers of electrical energy, as per claim 1, characterized by the fact that the employ of two-face squares, in the case of the same structure, redoubles the square capacity and determines two captation stations with opposite orientation, which facilitates the access.

5) Composable system for column deliverers of electrical energy, as per claim 1, characterized bu the fact that the possibility fo having more orders with apposite head orientation available in vertical succession of number and with variable height, enables to highly increase the capacity of the square without being compelled to change the base structure.

FIG.1

FIG.2

FIG.3

FIG.4

FIG.5

FIG.6

FIG.7

FIG.8

0 252 195

FIG. 9

13

15

14

8

16

16

16

17

FIG.10

FIG. 11

26